# EUROPEAN PATENT APPLICATION

(11) **EP 2 141 357 A1**
(43) Date of publication of application: **06.01.2010**
(21) Application number: 08159647.0
(22) Date of filing: 03.07.2008
(51) Int. Cl.: F03D 1/06, F03D 3/06

(54) **A wind turbine blade**

(71) Applicant: Dundalk Institute of Technology, Dundalk Louth (IE)
(72) Inventor: Staudt,, Laurence D., Dundalk, Co. Louth (IE)
(74) Representative: Catesby, Olivia Joanne

(57) **Abstract**

The present invention relates to a wind turbine blade (1) for a rotor (6). The blade 1 comprises a deformable member (2) arranged to form a leading edge (3) of the blade. The deformable member (2) is adapted to undergo a sudden deformation or deflation in response to pressure differences on the blade when a predetermined rotor speed is reached.

## Description

### Field of the Invention

The present invention relates to wind turbines, and in particular to wind turbine blades.

### Background to the Invention

A wind turbine is a machine used to convert the kinetic energy in wind into mechanical energy. The mechanical energy may then be converted to electrical energy. Typically, a wind turbine comprises a rotor having a plurality of blades mounted on a tower, and an electrical generator for converting the mechanical energy to electricity.

Wind turbines require a system to prevent destructive overspeeding of the turbine. Overspeeding can occur due to extreme wind conditions, or when the turbine becomes unloaded due to generator failure. If the generator fails, it no longer limits rotation of the rotor, resulting in a "runaway" condition wherein the rotor reaches a very high rotational speed. Overspeeding, however occurring, can result in damage to the turbine.

In large wind turbines, overspeed protection is typically accomplished by a blade pitch control system. When an overspeed condition occurs, the blades are pitched at up to 90° to the wind, slowing the rotor or bringing the rotor to a stop. This system requires a blade pitching mechanism, adding cost and complexity to the turbine. Generally, this additional cost can be justified in a large wind turbine. However, smaller wind turbines are usually fixed pitch, that is, the blades are fixedly attached to the rotor hub. Thus, in smaller turbines overspeed protection is often achieved by turning the entire rotor out of the wind, or by using the generator as a brake. Turning the entire rotor out of the wind requires a tail hinge mechanism and also reduces the power output of the wind turbine in gusty conditions by unnecessarily operating the rotor at an angle to the wind. This system is mechanically difficult to implement on wind turbines above about 5kW power output.

International Patent Application Publication No. WO00/75508 describes a method and device for regulating the airflow around a turbine blade in order to limit the power produced by the turbine. The device comprises a flexible spoiler attached to a leading edge of the blade. The spoiler is activated by filling it with a fluid. When the spoiler is activated, it changes the airflow around the blade, thereby regulating the speed of rotation of the rotor. This arrangement requires a complex arrangement of pumps and valves in order to regulate the flow of fluid into the spoiler, making it costly and therefore suitable only for large wind turbines.

### Summary of the Invention

According to the present invention, there is provided a wind turbine blade for a rotor, comprising a deformable member arranged to form a leading edge of the blade, wherein the deformable member is adapted to undergo a sudden (substantially instantaneous) deformation or deflation in response to pressure differences on the blade when a predetermined rotor speed (corresponding to an overspeed condition) is reached.

Suitably, the deformable member is arranged such that, under normal (non-overspeed) conditions, the leading edge of the blade has a conventional shape, that is, the blade has an aerofoil shape having a leading edge, a trailing edge and a tip. The deformable member may form all or part of the leading edge of the blade.

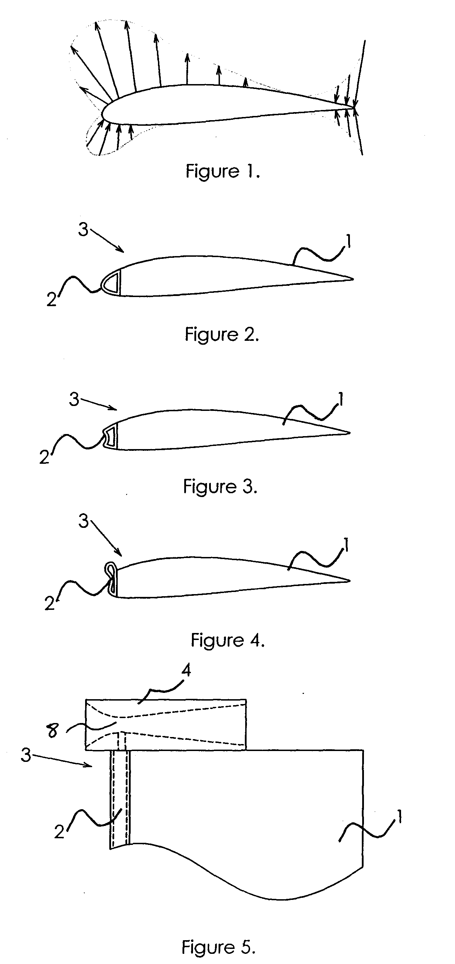

As discussed above, an overspeed condition occurs when, due to generator failure or other circumstances, a wind turbine rotor turns at a rotational speed that has the potential to damage the rotor and/or a generator which it drives, for example, due to excessive rotor thrust or centripetal force. Figure 1 shows the pressure distribution around a typical wind turbine blade, when in use. The rotation of the blade causes a vacuum (negative pressure) to be created at the upper side of the blade (and at the blade tip), and a positive pressure to be created on the underside of the blade. According to the present invention, the deformable member is adapted to deform or deflate when the pressure differential on the blade reaches a specific threshold corresponding to an overspeed condition. Thus, the leading edge of the blade deforms so that the blade no longer has an aerofoil shape. This decreases lift and increases drag on the blade, so that the speed of the rotor is limited.

One advantage of this arrangement is that it provides a simple and effective means of overspeed protection in a wind turbine. A further advantage of this arrangement is that it requires no moving parts, and is therefore robust and relatively cheap to produce. The present invention is thus ideally applied to small wind turbines, for example, under about 5kW power output.

Preferably, the deformable member is hollow and flexible, and is adapted to collapse when an overspeed condition is reached. Specifically, the deformable member comprises a rubber material, and optionally, the deformable member is a rubber extrusion. More specifically, the deformable member may comprise EPDM rubber or silicone.

This arrangement provides the further advantage of eliminating the need to provide the blade with separate abrasion prevention measures, such as Teflon tape applied to the leading edge of the blade. The flexible (rubberised) leading edge provides inherent abrasion protection.

The blade may further comprise means for creating a negative pressure (vacuum) within the deformable member. Preferably, the means for creating a negative pressure or vacuum comprises a fluid path between the interior of the deformable member and the upper side of the turbine blade or the blade tip. This allows the negative pressure generated at the upper side or tip of the blade to be used to evacuate the deformable member. As the rotor speed increases, the negative pressure on the upper side of the blade increases, thus drawing air from the interior of the deformable member and increasing the negative pressure within the deformable member. The deformable member is designed so that, when an overspeed condition is reached, the vacuum created therein is sufficient to cause the member to deform from its normal inflated or expanded configuration to a deflated or collapsed configuration. Preferably, the deformable member should be sufficiently resilient to allow the member to resume its inflated or expanded configuration automatically, once the rotor has slowed.

As discussed above, the deformable member retains its normal configuration (and the blade retains its conventional aerofoil shape) until the overspeed condition is reached, at which point the leading edge undergoes a rapid and dramatic deformation to slow the rotor. The material, size and shape of the deformable member may be carefully selected in order to determine the speed at which the deformation occurs. The aerodynamics of the blade may also be designed to ensure that the deformation occurs at a particular rotor speed. The stronger or stiffer the material chosen, the higher the rotational speed at which the deformation will occur. Similarly, the wall thickness of the deformable member may be selected in order to determine the speed at which the deformation occurs, where the greater the wall thickness, the higher the speed at which the member will deform. Deformation at any desired rotor speed can be achieved by selection of the material, thickness, shape or size of the deformable member.

According to one embodiment of the present invention, the means for creating a negative pressure (or vacuum) comprises at least one Venturi (Venturi tube). The Venturi is preferably positioned at the tip of the blade, in fluid communication with the interior of the deformable member. This allows the negative pressure generated at the blade tip to be used to create a vacuum within the deformable member. The Venturi increases the negative pressure within the deformable member with the square of the rotor speed. Throat diameter of a Venturi tube determines the level of vacuum created by the tube. For a given turbine, a Venturi having an appropriate throat diameter is selected to ensure that the required vacuum level (to achieve deflation) is created when the overspeed condition is reached.

Alternatively (or in addition), the means for creating a vacuum comprises at least one pressure tap point into the deformable member. As shown in Figure 1, an area of negative pressure is created at the upper side of the turbine blade (and at the blade tip) when the blade rotates. The pressure tap may be provided at an upper side of the deformable member or at the blade tip end of the deformable member, so that the interior of the deformable member is in fluid communication with an area of negative pressure. The pressure tap allows the negative pressure at the upper side of the blade or the blade tip to be used to create a vacuum within the deformable member, thereby causing the member to deform or collapse when an overspeed condition is reached. In one embodiment, the pressure tap point comprises an aperture in the deformable member.

According to a second aspect of the invention, there is provided a wind turbine rotor comprising at least one, and optionally a plurality of wind turbine blades as described above.

An advantage of this arrangement is that the rotor is provided with a "failsafe" overspeed protection. If the deformable member of one blade fails to deform, the deformation of the other blades will still prevent an overspeed condition.

### Brief Description of the Drawings

Figure 1 is a cross-sectional view of a conventional wind turbine blade, showing the areas of positive and negative pressure;
Figure 2 is a cross-sectional view of a wind turbine blade according to the present invention, in normal operation;
Figure 3 is a cross-sectional view of the wind turbine blade of Figure 2, wherein the deformable member is partially deployed;
Figure 4 is a cross-sectional view of the wind turbine blade of Figure 2, wherein the deformable member is fully deployed; and
Figure 5 is a top plan view of a tip portion of a wind turbine blade according to the present invention;
Figure 6 is a perspective view of the wind turbine blade of Figure 5;
Figure 6A is a detail view of a portion of the blade of Figure 7; and
Figure 7 is a front elevation view of a wind turbine rotor according to the present invention.

### Detailed Description of the Drawings

Figure 2 shows a wind turbine blade 1 for a rotor, comprising a deformable member 2 arranged to form a leading edge 3 of the blade. As shown in Figure 1, under normal (non-overspeed) conditions, the leading edge 3 of the blade has a conventional shape (i.e. the blade has an aerofoil shape). In the embodiment shown, the deformable member 2 is hollow and flexible, and is adapted to collapse or deflate in response to pressure differences caused when the blade experiences an overspeed condition. The deformable member 2 is adapted to undergo a sudden deformation when a predetermined rotor speed corresponding to an overspeed condition is reached. Thus, the deformable member retains its normal configuration (and the blade retains its conventional shape) until the overspeed condition is reached, at which point the leading edge undergoes a rapid and dramatic deformation to slow the rotor, as shown in Figure 3. The change of shape (aerodynamic "damage") caused by this initial deformation is sufficient to slow the blade significantly. Figure 4 shows the deformable member fully deployed (collapsed).

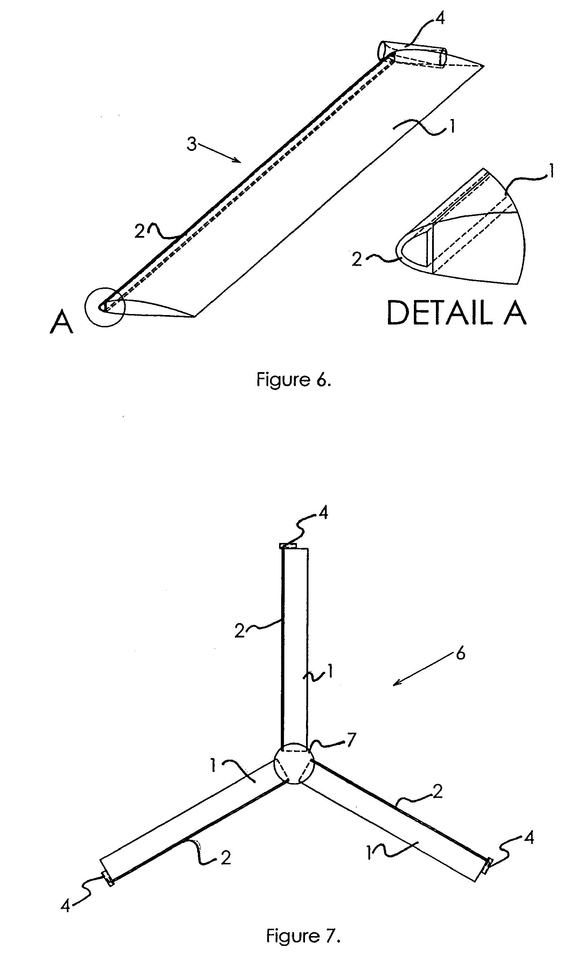

A second embodiment of the present invention is shown in Figures 5, 6 and 6A. As in the previous embodiment, the blade 1 comprises a hollow deformable member 2 arranged to form a leading edge of the blade. The wind turbine blade 1 further comprises a Venturi tube 4 positioned at the blade tip 5 and in fluid communication with the interior of the deformable member 2. Thus, a fluid path is created between an area of negative pressure (at the blade tip) and the interior of the deformable member.
As the speed of the rotor increases, the Venturi tube 4 increases the negative pressure or vacuum within the deformable member 2, proportional to the square of the rotor speed. This ensures that the deformable member collapses in a repeatable manner when the overspeed condition is reached.

The vacuum level at which the deformable member collapses may be determined by careful selection of the wall thickness and materials of the deformable member. The throat diameter 8 of the Venturi may then be selected in order to ensure that the required vacuum level is achieved at the appropriate speed, so that when the overspeed point is reached, the deformable member undergoes a sudden deformation.

Figure 7 shows a wind turbine rotor 6 comprising three wind turbine blades 1 according to the invention. Each blade 1 is substantially as described above with reference to Figures 5 and 6. Each of the blades is connected to a central hub 7. Each of the blades is provided with overspeed protection as described above.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A wind turbine blade for a rotor, comprising a deformable member arranged to form a leading edge of the blade, wherein the deformable member is adapted to undergo a sudden deformation in response to pressure differences on the blade when a predetermined rotor speed is reached.

2. A wind turbine blade as claimed in claim 1, wherein the deformable member is hollow and flexible, and is adapted to collapse when the predetermined rotor speed is reached.

3. A wind turbine blade as claimed in claim 2, wherein the deformable member comprises a rubber material, and optionally the deformable member is a rubber extrusion.

4. A wind turbine blade as claimed in claim 2 or claim 3, wherein the deformable member comprises EPDM rubber or silicone.

5. A wind turbine blade as claimed in any of claims 2 to 4, wherein the material and/or thickness of the deformable member may be selected to determine the rotor speed at which the deformable member deforms.

6. A wind turbine blade as claimed in any of claims 2 to 5, further comprising means for creating a negative pressure within the deformable member.

7. A wind turbine blade as claimed in claim 6, wherein the means for creating a negative pressure comprises a fluid path between the interior of the deformable member and an upper side of the turbine blade or the blade tip.

8. A wind turbine blade as claimed in claim 6 or claim 7, wherein the means for creating a negative pressure comprises at least one Venturi tube.

9. A wind turbine blade as claimed in claim 8, wherein the Venturi is positioned at the tip of the blade, in fluid communication with the interior of the deformable member.

10. A wind turbine blade as claimed in any of claims 6 to 9, wherein the means for creating a negative pressure comprises at least one pressure tap point into the deformable member.

11. A wind turbine blade as claimed in claim 10, wherein the pressure tap is provided at an upper side of the deformable member or at the blade tip end of the deformable member, so that the interior of the deformable member is in fluid communication with an area of negative pressure.

12. A wind turbine blade as claimed in claim 10 or claim 11, wherein the pressure tap point comprises an aperture in the deformable member.

13. A wind turbine rotor comprising at least one, and optionally a plurality of, wind turbine blades as claimed in any preceding claim.

14. A wind turbine blade substantially as hereinbefore described with reference to and/or as illustrated in Figures 2, 3 and 4 or Figures 5 and 6 of the accompanying drawings.

15. A wind turbine rotor substantially as hereinbefore described with reference to and/or as illustrated in Figure 7 of the accompanying drawings.
